# FASCICULE DE BREVET EUROPEEN

(11) **EP 3 936 824 B1**
(45) Date de publication et mention de la délivrance du brevet: **25.11.2026**
(21) Numéro de dépôt: 21179443.3
(22) Date de dépôt: 15.06.2021
(51) Int. Cl.: G01C 21/30

(54) **PROCÉDÉ DE CARACTÉRISATION D'UN TRAJET PARCOURU PAR UN UTILISATEUR**
VERFAHREN ZUR CHARAKTERISIERUNG EINER VON EINEM NUTZER ZURÜCKGELEGTEN STRECKE
METHOD FOR CHARACTERISING A PATH TRAVELLED BY A USER

(30) Priorité: 08.07.2020 FR 2007213
(43) Date de publication de la demande: 12.01.2022
(73) Titulaire: IFP Energies nouvelles, 92500 Rueil-Malmaison (FR)
(72) Inventeur: GONZALEZ DE COSSIO ECHEVERRIA, Francisco Jose, 92852 Rueil-Malmaison Cedex (FR); SABIRON, Guillaume, 92852 Rueil-Malmaison Cedex (FR); THIBAULT, Laurent, 92852 Rueil-Malmaison Cedex (FR)
(74) Mandataire: IFP Energies nouvelles

(56) Documents cités:
- BESSE PHILIPPE C ET AL: "Review and Perspective for Distance-Based Clustering of Vehicle Trajectories", IEEE TRANSACTIONS ON INTELLIGENT TRANSPORTATION SYSTEMS, IEEE, PISCATAWAY, NJ, USA, vol. 17, no. 11, 1 November 2016 (2016-11-01), pages 3306 - 3317, XP011627030, ISSN: 1524-9050, [retrieved on 20161028], DOI: 10.1109/TITS.2016.2547641
- ZBIGNIEW SMOREDA ET AL: "Spatiotemporal data from mobile phones for personal mobility assessment", 1 January 2013 (2013-01-01), XP055297817, Retrieved from the Internet <URL:http://citeseerx.ist.psu.edu/viewdoc/download?doi=10.1.1.649.8361&rep=rep1&type=pdf> [retrieved on 20210326], DOI: 10.1108/9781781902882-041
- JOHN DOYLE ET AL: "Utilising Mobile Phone Billing Records for Travel Mode Discovery", ISSC, 1 January 2011 (2011-01-01), XP055297821
- F. ASGARIA. SULTANH. XIONGV. GAUTHIERM.A. EL-YACOUBI: "Ct-mapper: mapping sparse multimodal cellular trajectories using a multilayer transportation network", COMPUT. COMMUN., vol. 95, 2016, pages 69 - 81, XP055297966
- ANDERSON DANNY L. ET AL: "Quantitative Methods for Comparing Different Polyline Stream Network Models", JOURNAL OF GEOGRAPHIC INFORMATION SYSTEM, vol. 06, no. 02, 1 January 2014 (2014-01-01), pages 88 - 98, XP093113113, ISSN: 2151-1950, Retrieved from the Internet <URL:http://www.scirp.org/journal/doi.aspx?DOI=10.4236/jgis.2014.62010> [retrieved on 20231214], DOI: 10.4236/jgis.2014.62010

## Description

### Domaine technique

La présente invention concerne le domaine de la caractérisation d'un trajet parcouru par un utilisateur, notamment la caractérisation de l'appartenance du trajet parcouru avec un regroupement (groupe, ou en anglais « cluster ») de trajets antérieurs, et/ou de la caractérisation du mode de transport de l'utilisateur.

Le domaine du transport revêt un aspect essentiel de la vie quotidienne dont l'économie mondiale dépend fortement. Cependant, il joue également un rôle majeur dans la dégradation de la qualité de l'air et dans l'augmentation des émissions de CO₂, en particulier dans les zones urbaines. Selon l'Organisation Mondiale de la Santé (OMS), le transport est l'une des principales sources de pollution atmosphérique, et il est directement lié à de multiples maladies respiratoires et cardiovasculaires. En outre, le transport mondial est à l'origine d'environ 24 % des émissions directes de CO₂ provenant de la combustion de carburants, dont près des trois quarts correspondent aux voitures, camions, bus et motos, ce qui aggrave encore le phénomène de réchauffement climatique. Parmi les autres types d'émissions nocives figurent les oxydes d'azote (NOx), l'ozone troposphérique (O₃) et les particules (PM), qui dépassent généralement les limites recommandées. L'importance du rôle des transports dans la qualité de l'air se reflète également dans le nombre croissant d'actions politiques menées en Europe au cours des dernières années, ce qui en fait un sujet central. Les stratégies visant à s'attaquer à ce problème sont notamment les suivantes : normes en matière d'efficacité des véhicules et des carburants à faible teneur en carbone, développement et incitations de véhicules à faibles émissions, politiques fiscales et régimes d'imposition.

Néanmoins, un aspect très important qui n'a pas encore été étudié de manière approfondie est l'impact direct du choix du mode de transport sur les émissions polluantes. En effet, à partir d'informations relatives à un trajet, on peut envisager mettre en œuvre des initiatives pour encourager les utilisateurs à faire des choix alternatifs et plus respectueux de l'environnement.

D'autre part, le développement technologique des appareils portables et de la communication sans fil s'est accéléré ces dernières années, notamment grâce aux systèmes de géolocalisation (par exemple GPS de l'anglais « Global Positioning System »), au moyen d'un téléphone intelligent, etc. Il est ainsi possible d'extraire tous types d'informations concernant les déplacements des utilisateurs dans le monde entier : le mode de transport utilisé est une information particulièrement précieuse. Toutefois, il est difficile d'identifier le mode de transport utilisé de manière fiable à partir de mesures, il est également difficile d'imposer à une utilisation de labéliser manuellement pour chaque trajet une donnée relative au mode de transport dans une application, pour associer les mesures à un mode de transport. Une première approche pour identifier le mode de transport peut consister en une approche basée sur la vitesse. Il est à noter qu'une telle approche basée sur la vitesse présente de graves défauts puisqu'elle ignore des phénomènes courants tels que le trafic ou les conditions météorologiques. Il existe, par conséquent, un besoin d'identification du mode de transport en utilisant les ensembles de données disponibles provenant des appareils mobiles équipés de système de géolocalisation.

De plus, une première étape naturelle vers cet objectif d'identification du mode de transport, consiste à réduire l'ampleur des données en regroupant les trajectoires en regroupements représentatifs (groupe, ou en anglais « clusters ») présentant des caractéristiques similaires. Chaque groupe peut avoir un représentant pour lequel le mode de transport est facilement disponible.

La stratégie de regroupement des trajectoires nécessite toutefois une méthode soigneusement choisie pour mesurer la similarité entre deux trajectoires données ; les données GPS brutes ont tendance à être asynchrones, sous-échantillonnées et avec des taux d'échantillonnage variables.

Le regroupement de trajectoires géographiques sur la base d'une mesure de similarité totale ou partielle peut être utilisé pour un vaste domaine d'applications, par exemple : connaissance des tendances des utilisateurs, prévision de la mobilité, contrôle du trafic et planification optimale des déplacements. En effet, la méthode de regroupement peut être interprétée comme une technique de réduction des données afin de résumer l'activité de déplacement de l'utilisateur sur une longue période et avec une résolution spatio-temporelle élevée.

### Technique antérieure

La mesure de la similarité entre une paire de trajets est de la plus haute importance dans un nombre croissant d'applications ; les notions de distances entre trajectoires sont au cœur de problèmes tels que le regroupement, la classification des trajectoires. Les choix habituels de mesures de similarité, pour lesquelles il existe de multiples variantes, comprennent notamment les méthodes basées sur les distances de Fréchet, la mesure de la distorsion temporelle dynamique (DTW), Hausdorff et euclidiennes, ainsi que ce qu'on appelle la plus longue suite commune (LCSS). Cependant, les deux premières mesures tendent à être un choix plus approprié pour l'étude des trajectoires des véhicules étant donné leur nature continue et ordonnée.

Par exemple, la distance dite de Fréchet offre un compromis efficace entre généralité et spécificité. En effet, elle est invariante par rapport à la vitesse de la trajectoire, mais dépend fortement du flux continu de la trajectoire. La distance de Fréchet entre la trajectoire A et B peut être décrite de manière informelle comme la longueur de la laisse la plus courte permettant à une personne sur un trajet A de promener un chien sur un trajet B (sans faire marche arrière). La mesure de la distorsion temporelle dynamique (DTW), introduite dans le domaine de la reconnaissance vocale comme mesure de similarité entre des séries temporelles, est également pertinente.

Dans sa version continue, la distance de Fréchet est donnée par la formule : $F \left(A, B\right) = {inf}_{α , β} {max}_{i ∈ \left[0, 1\right]} d \left(A\left(α\left(t\right)\right), B\left(β\left(t\right)\right)\right)$ où A et B sont des courbes sur un espace métrique (distance d), et où α et β représentent différentes paramétrisations de courbes. Toutefois, la distance de Fréchet est sensible aux valeurs aberrantes. Or, il est courant d'avoir de nombreuses valeurs aberrantes avec l'utilisation de systèmes actuels de géolocalisation ou les téléphones intelligents. Par conséquent, la distance de Fréchet en tant que telle n'est pas adaptée à la caractérisation de trajets. Une autre limitation de la distance de Fréchet originale est l'identification de portions de trajectoires similaires.

Pour une autre application, la distance de Fréchet a été utilisée notamment dans la méthode décrite dans la demande de brevet US2015/0354973, dans le but de placer des signaux de mesure sur une cartographie des routes (« map matching »).

Une autre difficulté liée à la mesure par système de géolocalisation, ou par téléphone intelligent, est le nombre limité de mesures disponibles pour certains tronçons, notamment des tronçons souterrains. Avec de telles mesures tronquées, il est difficile de caractériser de manière fiable et robuste un trajet parcouru.

Bien que la recherche concernant les distances inter-trajectoires est extrêmement vaste, les performances des algorithmes de regroupement correspondants ont fait l'objet d'une attention moindre. Les méthodes de regroupement les plus courantes sont les suivantes : k-means ou medoid, regroupement spectral, dbscan et analyse de regroupement hiérarchique. Cette dernière a été utilisée pour prédire la destination des conducteurs en ce qui concerne la forme des courbes, tel que décrit notamment dans le document P.C. Besse, B. Guillouet, J.-M. Loubes, F. Royer, "Review and Perspective for Distance-based Clustering of Vehicle Trajectories", IEEE Transactions on Intelligent Transportation Systems, 17 (11): 3306-3317, 2016. De même, le regroupement des trajectoires de véhicules obtenues par un système de vision automatisé a été proposé dans le document S. Atev, G. Miller, N.P. Papanikolopoulos, "Clustering of Vehicle Trajectories", IEEE Transactions on Intelligent Transportation Systems, 11 (3): 647-657, 2010. Ces méthodes sont basées sur le regroupement spectral et adaptent la distance de Hausdorff pour répondre à leurs besoins. D'autres méthodes introduisent une mesure de similarité à plusieurs caractéristiques qui peut être utilisée pour le regroupement des trajectoires, notamment pour la surveillance du trafic et la prédiction des embouteillages.

Le document F. Asgari, A. Sultan, H. Xiong, V. Gauthier, M.A. El-Yacoubi, "Ct-mapper: mapping sparse multimodal cellular trajectories using a multilayer transportation network", Comput. Commun. 95, 69-81, 2016 propose un algorithme non supervisé, basé sur un modèle de Markov caché (HMM), qui permet de faire correspondre des traces de téléphones portables sur un réseau de transport (CT-Mapper). Cette approche peut être utilisée pour unifier les informations sur les différents systèmes de transport et pour analyser la mobilité multimodale, ce qui inclut l'enregistrement du mode de transport à travers une grande zone métropolitaine. Cependant, lorsqu'elle est basée sur les enregistrements détaillés des appels (de l'anglais « Call Detailed Records » - CDR), la correspondance des cartes dépend fortement du nombre d'enregistrements et la durée de fonctionnement de l'algorithme global proposé est très long. La nature basse fréquence des CDR peut être problématique étant donné les inexactitudes fréquentes des début et de fin de trajet.

### Résumé de l'invention

La présente invention a pour but de caractériser un trajet parcouru par un utilisateur de manière robuste, même avec des mesures comprenant des valeurs aberrantes, ou des mesures tronquées (nombre de mesures limités pour certaines portions du trajet). Dans ce but, la présente invention concerne un procédé de caractérisation d'un trajet parcouru par un utilisateur selon la revendication 1.

Selon un mode de réalisation, ladite caractérisation concerne le classement dudit trajet à caractériser dans un regroupement représentatif de trajets.

Selon l'invention, ladite caractérisation concerne la détermination d'au moins un mode de transport dudit utilisateur pour ledit trajet à caractériser.

Avantageusement, on segmente ledit trajet à caractériser en au moins deux sous-trajets, et on détermine ledit au moins un mode de transport dudit utilisateur pour chaque sous-trajet. De manière avantageuse, on détermine ledit au moins un mode de transport par comparaison avec un outil de planification de déplacement multimodal.

De préférence, ledit outil de planification mutlimodal comporte une cartographie des déplacements et des données de transport en commun.

Conformément à une mise en œuvre, on compare chaque distance modifiée de Fréchet discrète déterminée avec un seuil, de préférence ledit seuil est inférieur à 500 m, et de manière préférentielle ledit seuil est inférieur à 250 m, et on met en œuvre la caractérisation au moyen des étapes suivantes :
i) Si ladite distance modifiée de Fréchet discrète déterminée est inférieure ou égale audit seuil, alors on attribue audit trajet à caractériser la même caractérisation que ledit trajet antérieur correspondant, et
ii) Si ladite distance modifiée de Fréchet discrète déterminée est supérieure audit seuil, alors on n'attribue aucune caractérisation audit trajet à caractériser.

Selon un aspect, on mesure au moins un paramètre complémentaire dudit trajet à caractériser, ledit paramètre complémentaire étant choisi parmi la vitesse dudit utilisateur, l'accélération dudit utilisateur, la précision dudit capteur de géolocalisation, l'altitude dudit utilisateur, et on met en œuvre un critère supplémentaire pour caractériser ledit trajet à caractériser en fonction dudit paramètre complémentaire.

Selon l'invention, on détermine ladite distance modifiée de Fréchet discrète en limitant, dans ledit séquencement optimal de couples de points, le nombre de liaisons pour un unique point d'un trajet, de préférence le nombre limite de liaisons est compris entre 3 et 10, de manière préférée entre 4 et 7.

Conformément à une option, on détermine ladite distance modifiée de Fréchet discrète après éliminations des valeurs maximales de la distance dans ledit séquencement optimal de couples de points.

Conformément à un mode de réalisation, le procédé comporte en outre une étape de prétraitement des mesures par une interpolation spatiale en distance.

Selon une mise en œuvre, ladite base de données desdits trajets antérieurs comporte uniquement des trajets antérieurs dudit utilisateur, avec au moins les données de géolocalisation et d'horodatages desdits trajets antérieurs.

Conformément à un aspect, ladite base de données comporte une information liée au mode de transport pour au moins un trajet antérieur.

Selon un aspect, ladite base de données comporte au moins un groupement représentatif desdits trajets antérieurs.

En outre, l'invention concerne un produit programme d'ordinateur téléchargeable depuis un réseau de communication et/ou enregistré sur un support lisible par ordinateur et/ou exécutable par un processeur ou un serveur selon la revendication 14.

D'autres caractéristiques et avantages du procédé selon l'invention, apparaîtront à la lecture de la description ci-après d'exemples non limitatifs de réalisations, en se référant aux figures annexées et décrites ci-après.

### Liste des figures

La figure 1 illustre les étapes du procédé selon un premier mode de réalisation.
La figure 2 illustre les étapes du procédé selon un deuxième mode de réalisation.
La figure 3 illustre les étapes du procédé selon un troisième mode de réalisation.
La figure 4 illustre les étapes du procédé selon un quatrième mode de réalisation.
La figure 5 illustre la construction de la distance de Fréchet modifiée selon un mode de réalisation de l'invention.
La figure 6 illustre, pour un exemple, la détermination de la distance de Fréchet pour un trajet à caractériser avec un premier trajet antérieur.
La figure 7 illustre, pour un exemple, la détermination de la distance de Fréchet pour un trajet à caractériser avec un deuxième trajet antérieur.
La figure 8 illustre, pour un exemple, une identification du mode de transport par utilisation d'un outil de planification de déplacement.

### Description des modes de réalisation

La présente invention concerne un procédé de caractérisation d'un trajet parcouru par un utilisateur. On appelle trajet parcouru par un utilisateur, un déplacement réalisé par un utilisateur entre une origine et une destination avec tout moyen de locomotion (véhicule, bicyclette, transports en commun : bus, tramway, train, métro, déplacement à pieds, etc.). Sur un même trajet, l'utilisateur peut utiliser plusieurs moyens de locomotion différents, on parle alors de trajet multimodal (par exemple une combinaison de transports en commun, ou une combinaison de transports en commun et de déplacement à pieds, ou en bicyclette, etc.). On nomme dans la suite de la description le trajet parcouru par l'utilisateur, trajet à caractériser. La caractérisation concerne la détermination d'au moins une caractéristique représentative du trajet. Selon un mode de réalisation de l'invention préféré, la caractérisation peut concerner la détermination du ou des mode(s) de transport (c'est-à-dire du ou des moyen(s) de locomotion). Alternativement ou additionnellement, la caractérisation peut concerner l'appartenance du trajet à caractériser à un regroupement représentatif de trajets (à un « cluster »), les trajets appartenant à un même regroupement représentatif de trajets ayant des attributs similaires, en particulier des parcours similaires.

Le procédé de caractérisation utilise une base de données comportant des données de trajets antérieurs. Les trajets antérieurs sont des trajets parcourus antérieurement au trajet à caractériser, et pour lequel des données sont disponibles : en particulier la localisation, l'horodatage. La base de données peut comporter en outre d'autres données relatives aux trajets antérieurs, par exemple, le mode de transport, la vitesse de l'utilisateur, l'altitude de l'utilisateur, etc. La base de données peut être enregistrée sur une mémoire informatique. Selon un mode de réalisation de l'invention, la base de données peut comporter uniquement des données des trajets antérieurs de l'utilisateur du trajet à caractériser. Ainsi, la caractérisation du trajet peut être représentative des habitudes de l'utilisateur. En variante, la base de données peut comporter des données de trajets antérieurs de multiples utilisateurs. Ainsi la base de données peut comporter un grand nombre de trajets antérieurs, ce qui permet une meilleure précision de la caractérisation du trajet à caractériser.

Le procédé selon l'invention comporte les étapes suivantes :
- Mesure de la position et horodatage du trajet à caractériser
- Détermination de distances modifiées de Fréchet discrètes
- Caractérisation du trajet à caractériser

Ces étapes seront décrites en détail dans la suite de la description. Les étapes de détermination de distances modifiées de Fréchet discrètes et de caractérisation peuvent être mises en œuvre par un système informatique. Un tel système informatique peut comprendre une mémoire informatique de stockage, un processeur de calcul, et des moyens de communication, notamment avec les moyens de mesure.

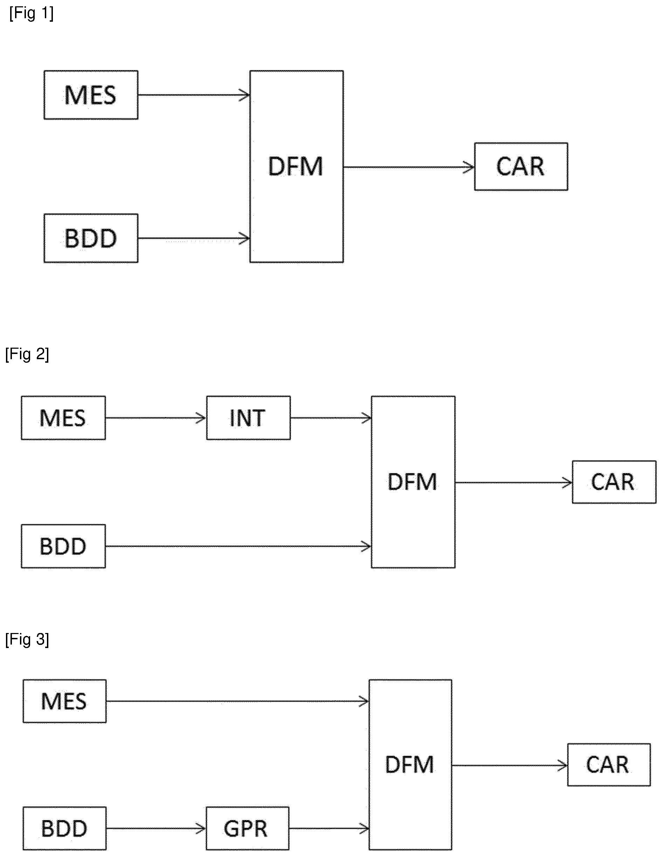

La figure 1 illustre, schématiquement et de manière non limitative, les étapes du procédé selon un premier mode de réalisation de l'invention. Une base de données BDD comporte des données de trajets antérieurs. Pendant le trajet à caractériser, on mesure MES la position et l'horodatage. Ces mesures, et les données de la base de données BDD sont ensuite utilisées pour déterminer une distance modifiée de Fréchet discrète DFM entre le trajet à caractériser et les trajets antérieurs. Cette distance modifiée de Fréchet discrète DFM permet alors de déterminer la caractérisation CAR du trajet à caractériser.

Selon un mode de réalisation de l'invention, le procédé peut comprendre une étape supplémentaire de prétraitement des mesures avant l'étape de détermination de distances de Fréchet modifiées. Cette étape de prétraitement des mesures permet d'améliorer l'échantillonnage de mesure.

Pour ce deuxième mode de réalisation, le procédé comporte les étapes suivantes :
- Mesure de la position et horodatage du trajet à caractériser
- Prétraitement des mesures
- Détermination de distances modifiées de Fréchet discrètes
- Caractérisation du trajet à caractériser

Ces étapes seront décrites en détail dans la suite de la description. Les étapes de prétraitement des mesures, détermination de distances de Fréchet modifiées et de caractérisation peuvent être mises en œuvre par un système informatique. Un tel système informatique peut comprendre une mémoire informatique de stockage, un processeur de calcul, et des moyens de communication, notamment avec les moyens de mesure.

La figure 2 illustre, schématiquement et de manière non limitative, les étapes du procédé selon le deuxième mode de réalisation de l'invention. Une base de données BDD comporte des données de trajets antérieurs. Pendant le trajet à caractériser, on mesure MES la position et l'horodatage. On réalise un prétraitement INT des mesures MES. Ces mesures prétraitées, et les données de la base de données BDD sont ensuite utilisées pour déterminer une distance de Fréchet modifiée discrète DFM entre le trajet à caractériser et les trajets antérieurs. Cette distance de Fréchet modifiée discrète DFM permet alors de déterminer la caractérisation CAR du trajet à caractériser.

Selon un mode de réalisation de l'invention, la base de données peut comprendre au moins un regroupement représentatif de trajets (« cluster »). Pour ce mode de réalisation, on peut déterminer la distance de Fréchet modifiée pour un seul trajet antérieur de chaque groupement représentatif de trajets, de préférence un trajet antérieur pour lequel on connaît le mode de transport. Ainsi, le nombre de distances de Fréchet modifiées déterminées est limité, ce qui diminue le temps de calcul.

La figure 3 illustre, schématiquement et de manière non limitative, les étapes du procédé selon le troisième mode de réalisation de l'invention. Une base de données BDD comporte des données de trajets antérieurs, et des regroupements représentatifs de trajets antérieurs GPR. Pendant le trajet à caractériser, on mesure MES la position et l'horodatage. Ces mesures, et les données de la base de données BDD, et les regroupements représentatifs GPR sont ensuite utilisés pour déterminer une distance de Fréchet modifiée discrète DFM entre le trajet à caractériser et les trajets antérieurs de chaque regroupement représentatif GPR. Cette distance de Fréchet modifiée discrète DFM permet alors de déterminer la caractérisation CAR du trajet à caractériser.

Les modes de réalisation des figures 2 et 3 peuvent être combinés pour combiner leurs effets.

### Mesure de la position et horodatage du trajet à caractériser

Lors de cette étape, on mesure, au moyen d'un capteur de géolocalisation, la position et l'horodatage d'une pluralité de points du trajet à caractériser.

Le capteur de géolocalisation peut être un capteur de positionnement par satellite, tel que le système GPS (de l'anglais Global Positioning System), le système Galileo, etc. Le capteur de géolocalisation peut être embarqué à bord du véhicule ou déporté (par exemple au moyen d'un téléphone intelligent, de l'anglais « smartphone »). De préférence, le capteur de géolocalisation peut être déporté dans un téléphone intelligent, de manière à être adapté à tout type de mode de transport.

L'horodatage peut être utilisé notamment pour le prétraitement (cf. étape suivante).

Alternativement, on peut également procéder à l'interpolation avec un horodatage virtuel.

### Prétraitement des mesures

On rappelle que cette étape est facultative, et correspond au deuxième mode de réalisation de l'invention illustré en figure 2. Lors de cette étape, on met en œuvre un prétraitement des mesures, de préférence au moyen d'une interpolation spatiale en distance (en d'autres termes en imposant une distance minimale entre deux points de mesure consécutifs), afin d'améliorer l'échantillonnage des mesures.

En effet, les mesures étant réalisées par le capteur de géolocalisation de manière discrète, la première étape permet de connaître la géolocalisation d'une pluralité de points de mesure. Toutefois, en raison d'un arrêt du véhicule, et en raison de l'imprécision pouvant être liée au capteur de géolocalisation, aux conditions météorologiques, à la traversée d'un tunnel, etc., la mesure du trajet à caractériser peut comprendre plusieurs points de mesure plus ou moins éloignés, alors qu'ils correspondent théoriquement au même point physique du trajet parcouru. Cette disparité des points de mesure peut générer une détermination des distances de Fréchet moyennée moins cohérente, ce qui peut générer une caractérisation moins précise du trajet à caractériser.

Selon un exemple de mise en œuvre, ce pré-traitement permet d'échantillonner les données afin d'avoir un point tous les 50m (ou 25m, 100m, 150m, etc.). En effet, généralement le capteur de géolocalisation de type GPS peut réaliser la mesure à une fréquence de 1Hz donc lorsque l'utilisateur s'arrête par exemple à un feu rouge, on a beaucoup de points au même endroit, ce qui peut augmenter la distance de Fréchet sans qu'il n'y ait de déplacements.

### Détermination de la distance modifiée de Fréchet discrète

Lors de cette étape, pour au moins deux trajets antérieurs de la base de données, on détermine une distance entre le trajet à caractériser et le trajet antérieur au moyen de la distance modifiée de Fréchet discrète. On rappelle que la distance de Fréchet « classique » entre la trajectoire A et B peut être décrite de manière informelle comme la longueur de la laisse la plus courte permettant à une personne sur un trajet A de promener un chien sur un trajet B (sans faire marche arrière). On appelle la distance modifiée de Fréchet discrète une détermination d'une distance se basant sur la méthode mise en œuvre pour le calcul de la distance Fréchet « classique », mais en ne calculant pas la distance la plus grande entre les points des deux trajets considérés, mais une moyenne des distances entre les deux trajets considérés de manière discrète. Cette distance modifiée de Fréchet discrète permet de s'affranchir de certaines mesures aberrantes.

Pour la distance modifiée de Fréchet discrète, on construit de la même manière que pour la distance de Fréchet classique :
- une polyligne reliant les points du trajet à caractériser,
- une polyligne reliant les points du trajet antérieur, et ensuite
- l'ensemble des liaisons qui relient un point de chaque polyligne.

L'étape de détermination des liaisons qui relient un point de chaque polyligne est effectuée de manière dynamique et récursive. Deux trajets discrets X et Y de longueurs respectives N et M sont considérés ici. La première étape concerne la construction d'une matrice de distance cumulative notée D qui contient à la ligne n, et colonne m, la distance de Fréchet discrète calculée du début de chaque trajet jusqu'au points n et m (où 1 ≤ *n* ≤ *N* et 1 ≤ *m* ≤ *M*). On peut alors écrire : $D \left(n, m\right) = {F}_{d} \left(Xn, Ym\right)$

Avec *F_{d}* la version discrète de la distance de Fréchet, Xn, Ym les trajets tronqués de longueur n et m. La différence entre la version continue et discrète de la distance de Fréchet vient du fait que l'on ne considère pas les paramétrisations *α* et *β* comme des fonctions continues du temps mais uniquement l'ordonnancement des liaisons des trajets.

La matrice peut être calculée récursivement comme suit: $D \left(n, m\right) = min \left(D\left(n-1, m-1\right), D\left(n-1, m\right), D\left(n, m-1\right)\right) + d \left({x}_{n}, {y}_{m}\right)$

Où *xₙ* correspond au nième élément du trajet X et *yₘ* le mième élément du trajet Y, et d la distance entre le nième élément du trajet X et le mième élément du trajet Y.

La construction des liens est alors réalisée dans le sens inverse (en partant des points N et M jusqu'au début des deux trajets) en définissant les paires de points avec la distance minimal soit : ${P}_{i - 1} = arg min \left(D\left(n-1, m-1\right), D\left(n-1, m\right),D\left(n, m-1\right)\right)$

On obtient alors le séquencement optimal *P* = [*Pₙ,* ... *P*₁] où chaque *Pᵢ* représente un couple de point *xₖ* et *yₗ*. En parallèle, il est possible d'obtenir la séquence de distance optimale *d** = [*dₙ, ... , d*₁] où *dᵢ* représente la distance métrique entre les points *xₖ* et *yₗ* associées à*Pᵢ*.

Une modification pouvant être apportée par l'invention peut consister à saturer le nombre de liens par point à savoir, si *xₖ* (ou *yₗ*) apparait plus de *sat* fois dans le séquencement P (et respectivement dans la séquence d*), on supprime les *Pᵢ* qui contiennent *xₖ* (ou *yₗ*) et on obtient alors un séquencement *Pₛₐₜ* (et respectivement dans une séquence ${d}_{sat}^{∗}$). *sat* est une valeur limite choisie de préférence autour de 5. On appelle cette distance « distance modifiée de Fréchet discrète saturée ».

Enfin, la distance modifiée de Fréchet discrète s'obtient en prenant la moyenne de la séquence de distance d* ou ${d}_{sat}^{∗}$.

Alternativement, la distance modifiée de Fréchet discrète peut s'obtenir en prenant la moyenne tronquée de la séquence de distance. La moyenne tronquée d'un vecteur est une mesure de moyenne arithmétique en éliminant les valeurs extrêmes. Selon un exemple de réalisation, afin de se prémunir des mesures aberrantes, la moyenne tronquée peut n'élimer que les valeurs les plus grandes. On appelle cette distance « distance modifiée de Fréchet discrète tronquée ».

Selon ce mode de réalisation, afin d'augmenter la disponibilité de trajets potentiellement similaires, il est également possible de calculer par la suite la distance modifiée de Fréchet discrète en inversant l'ordre du trajet X (le dernier point devient le premier, etc.). Il convient finalement de sélectionner la distance la plus faible entre les deux calculs (X par rapport à Y et *Xᵢₙᵥ* par rapport *Y).* Ce mode de réalisation permet de garantir la robustesse du procédé par rapport au sens du trajet. En effet, si l'utilisateur parcourt le trajet X de Xn à X1 et que ce trajet est comparé avec un trajet antérieur qui va de X1 à Xn, et si la distance modifiée de Fréchet discrète est calculée entre ces deux trajets, elle risque d'être très grande ce qui peut être pénalisant car il s'agit du même trajet parcouru en sens inverse.

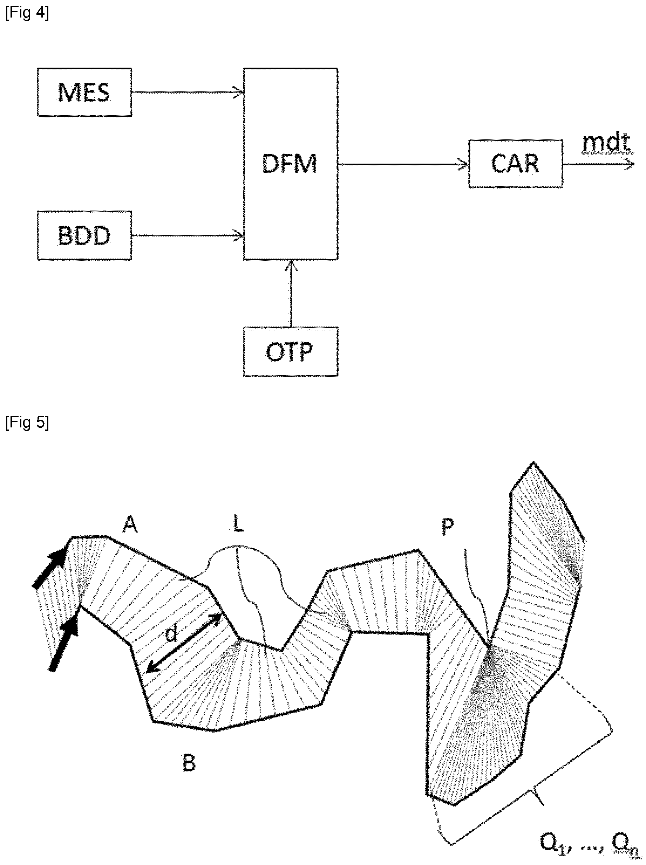

La figure 5 illustre, schématiquement et de manière non limitative, la détermination de la distance de Fréchet modifiée discrète selon un mode de réalisation de l'invention. Pour cette figure, on cherche à déterminer la distance modifiée de Fréchet discrète entre un trajet A représenté par la polyligne A, et un trajet B représenté par la polyligne B. Les trajets A et B sont parcourus dans le sens des flèches indiquées. Sur cette figure, on a représenté les liaisons L entre chaque trajet A et B (qui pourrait correspondre à une laisse entre le promeneur sur le trajet A et son chien sur le trajet B). Les liaisons L ont une distance d variable. On remarque que chaque point d'un trajet peut être relié à plusieurs points de l'autre trajet. Par exemple, le point P du trajet A est relié à une pluralité de points Q₁, ..., Qₙ du trajet B. Pour la distance de Fréchet modifiée discrète, on considère la moyenne de la distance d pour tous les points considérés, par exemple au moyen de distance modifiée de Fréchet discrète saturée et/ou tronquée. De plus, selon un mode de réalisation, on peut répéter ces étapes, en inversant le sens de circulation d'un des deux trajets.

Selon l'invention, on détermine la distance de Fréchet modifiée discrète en limitant le nombre de liaisons pour un unique point d'un trajet, de préférence le nombre limite de liaisons est compris entre 3 et 10, de manière préférée entre 4 et 7, et peut valoir 5. En d'autres termes, pour ce mode de réalisation, le nombre de liens partant de chaque point est limité. En référence à la figure 5, cela implique que le point P ne peut être lié qu'à un nombre limité de points Q₁, ..., Qₙ. Grâce à ce mode de réalisation, on peut calculer la distance de Fréchet modifiée discrete entre deux trajets, même si un trajet est bien plus court que l'autre. Cela est également possible avec le mode de réalisation usuel de la distance de Fréchet cependant, dans le cas d'un trajet bien plus court que l'autre, la distance de Fréchet classique sera très grande même si une sous-partie du long trajet est similaire au trajet court. Ainsi, on peut caractériser facilement des trajets de toute longueur.

### Caractérisation du trajet à caractériser

Lors de cette étape, on caractérise le trajet à caractériser par une comparaison des distances modifiées de Fréchet discrètes déterminées à l'étape précédente entre les au moins deux trajets antérieurs de ladite base de données et le trajet à caractériser.

Selon un mode de réalisation, on peut comparer chaque distance de Fréchet modifiée discrète déterminée à l'étape précédente avec un seuil, de préférence ledit seuil est inférieur à 500 m, et de manière préférentielle ledit seuil est inférieur à 250 m, et on peut mettre en œuvre la caractérisation au moyen des étapes suivantes :
i) Si la distance modifiée de Fréchet discrète déterminée est inférieure ou égale au seuil, alors on attribue au trajet à caractériser la même caractérisation que le trajet antérieur correspondant, et
ii) Si la distance modifiée de Fréchet discrète déterminée est supérieure au seuil, alors on n'attribue aucune caractérisation au trajet à caractériser.

Cette gamme de seuils permet d'identifier des trajets similaires. De préférence, le seuil peut valoir sensiblement 200m.

Alternativement, on peut attribuer au trajet à caractériser la caractérisation du trajet antérieur qui minimise la distance de Fréchet modifiée discrète. Selon une autre alternative, on peut cumuler les deux critères : on peut comparer la valeur minimale à un seuil, et on peut caractériser le trajet à caractériser si la valeur minimale est inférieure au seuil.

Conformément à un mode de réalisation de l'invention, on peut mesurer au moins un paramètre complémentaire du trajet à caractériser, le paramètre complémentaire pouvant être choisi parmi la vitesse de l'utilisateur, l'accélération de l'utilisateur, la précision du capteur de géolocalisation, l'altitude de l'utilisateur, et on peut mettre en œuvre un critère supplémentaire pour caractériser le trajet à caractériser en fonction du paramètre complémentaire. Par exemple, grâce à la distance de Fréchet modifiée discrète réduite (c'est-à-dire minimale et/ou inférieure à un seuil), on peut connaître le parcours du trajet à caractériser, et on peut savoir quel type de chemin a été parcouru (ville, autoroute, piste cyclable, etc.), et grâce à la vitesse de déplacement de l'utilisateur, on peut différencier le mode de transport et/ou le regroupement représentatif des trajets.

Selon une option de réalisation, cette étape peut comporter également l'enregistrement du trajet parcouru et caractérisé dans la base de données des trajets antérieurs. Le trajet parcouru et caractérisé devient alors un trajet antérieur pour la réitération du procédé pour un autre trajet parcouru par l'utilisateur. Ainsi, la base de données est complétée à chaque utilisation, ce qui favorise la fiabilité de la caractérisation.

Selon une première variante de cette étape, la caractérisation peut concerner l'appartenance du trajet à caractériser dans un regroupement représentatifs de trajets (« cluster »). Pour cette variante, on peut attribuer au trajet à caractériser le même regroupement représentatif de trajets que celui du trajet antérieur de la base de données (mode de réalisation de la figure 3) pour lequel la distance de Fréchet modifiée discrète est réduite (c'est-à-dire minimale et/ou inférieure à un seuil).

La caractérisation concerne la détection du mode de transport du trajet à parcourir. Quelle que soit la mise en œuvre, pour cette étape, on peut segmenter le trajet à caractériser en sous-trajet, et on peut attribuer à chaque sous-trajet un mode de transport. Ainsi, cette réalisation permet de prendre en compte les trajets multimodaux (avec différents moyens de transport). Une première mise en œuvre de cette variante peut consister à attribuer le mode de transport du trajet antérieur pour lequel la distance de Fréchet modifiée discrète est réduite (c'est-à-dire minimale et/ou inférieur à un seuil). Cette mise en œuvre nécessite qu'au moins un trajet antérieur de la base de données comporte une donnée relative au mode de transport de ce trajet antérieur.

Une deuxième mise en œuvre de cette variante peut consister à comparer le trajet à caractériser avec au moins un trajet obtenu avec un outil de planification de déplacement multimodal. Cet outil fournit des services d'analyse de transport et de planification de trajets multimodaux. Cet outil de planification multimodal peut comporter notamment une cartographie des déplacements et des données de transport en commun. Un trajet obtenu par cet outil peut être segmenté de manière à ce que le mode de transport spécifique soit bien défini pour chaque portion du trajet. La comparaison du trajet à caractériser avec au moins un trajet obtenu avec un outil de planification de déplacement multimodal peut être réalisé au moyen de la distance de Fréchet modifiée discrète mise en œuvre à l'étape précédente. On attribue alors au trajet à caractériser le ou les moyen(s) de transport correspondant au trajet obtenu par cet outil de planification de déplacement multimodal ayant une distance de Fréchet modifiée discrète réduite (valeur minimale et/ou inférieure à un seuil). Selon un aspect de cette mise en œuvre, l'outil de planification de déplacement multimodal peut être disponible en tant que service en ligne (« webservice »). Dans ce cas, les moyens informatiques mis en œuvre par le procédé selon l'invention peuvent comporter des moyens de connexion au service en ligne, notamment une connexion internet.

La figure 4 illustre, schématiquement et de manière non limitative, le procédé de caractérisation selon cette mise en œuvre. Une base de données BDD comporte des données de trajets antérieurs. Pendant le trajet à caractériser, on mesure MES la position et l'horodatage. Ces mesures, et les données de la base de données BDD sont ensuite utilisées pour déterminer une distance de Fréchet modifiée discrète DFM entre le trajet à caractériser et les trajets antérieurs. En outre, on détermine une distance de Fréchet modifiée discrète DFM entre le trajet à caractériser et un trajet obtenu depuis un outil de planification de trajet multimodal OTP. Ces distances de Fréchet modifiées DFM permettent alors de déterminer la caractérisation CAR du trajet à caractériser, en l'occurrence le mode de transport mdt.

Selon une troisième variante de cette étape, la caractérisation peut concerner la détection du mode de transport du trajet à parcourir et l'appartenance du trajet à caractériser dans un regroupement représentatifs de trajets.

Pour cette troisième variante, on peut combiner la première variante avec l'une des mises en œuvre de la deuxième variante décrite ci-dessus. Par exemple, on peut dans un premier temps déterminer l'appartenance du trajet à caractériser dans un regroupement représentatif de trajets. Puis, on attribue au trajet à caractériser le mode de transport correspondant au regroupement représentatif de trajets. Cet exemple de réalisation impose que chaque regroupement représentatif de trajets comporte au moins un trajet antérieur pour lequel un mode de transport est identifié.

En outre, le procédé de caractérisation peut comprendre une étape de construction des regroupements représentatifs (« clusters ») de trajets de la base de données. Par exemple, cette étape de construction des regroupements représentatifs (« clusters ») peut être mise en œuvre par une application de la distance de Fréchet modifiée discrète en comparant par deux les trajets antérieurs de la base de données.

Le procédé peut comporter une étape facultative d'affichage de la caractérisation du trajet parcouru. Lors de cette étape facultative, on peut afficher la caractérisation sur une carte routière. Cet affichage peut prendre la forme d'une note ou d'un code couleur (par exemple, une couleur par mode de transport et/ou une couleur par « cluster »). Cet affichage peut être réalisé à bord d'un véhicule : sur un dispositif portatif autonome, tel qu'un appareil de géolocalisation (de type GPS), un téléphone portable (de type téléphone intelligent). Il est également possible d'afficher la caractérisation du trajet à caractériser sur un site internet.

L'invention concerne par ailleurs un produit programme d'ordinateur téléchargeable depuis un réseau de communication et/ou enregistré sur un support lisible par ordinateur et/ou exécutable par un processeur ou un serveur. Ce programme comprend des instructions de code de programme pour la mise en œuvre du procédé tel que décrit ci-dessus, lorsque le programme est exécuté sur un ordinateur ou un téléphone portable ou tout système analogue.

### Exemples

Les avantages du procédé selon l'invention ressortiront des exemples d'application décrits ci-après.

Pour les exemples, on caractérise des trajets mesurés par un capteur de géolocalisation au sein d'un téléphone intelligent. Les trajets mesurés et antérieurs sont situés dans la métropole Lyonnaise.

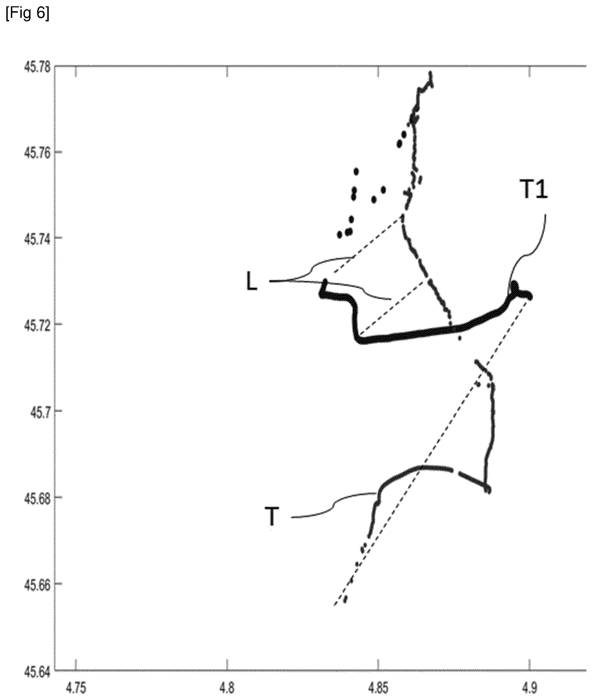

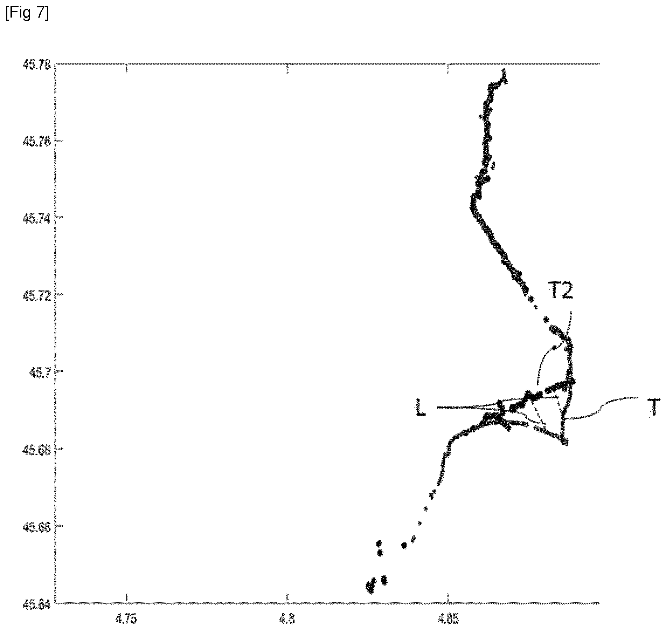

Pour le premier exemple, deux trajets antérieurs sont considérés, et on détermine la distance de Fréchet modifiée discrète entre le trajet à caractériser et chacun des deux trajets antérieurs, au moyen du procédé selon l'invention. Les figures 6 et 7 représentent deux cartes de la métropole Lyonnaise. Dans un souci de lisibilité des cartes, les routes ne sont pas représentées. La figure 6 illustre le trajet à caractériser T et le premier trajet antérieur T1, ainsi que plusieurs L liaisons entre les points du premier trajet à caractériser T et le premier trajet antérieur T1 sont représentés (la totalité de ces liaisons n'est pas représentée). La carte de la figure 7 illustre le trajet à caractériser T et le deuxième trajet antérieur T2, ainsi que plusieurs L liaisons entre les points du premier trajet à caractériser T et le deuxième trajet antérieur T2 sont représentés (la totalité de ces liaisons n'est pas représentée). On remarque que le trajet à caractériser T est similaire au trajet antérieur T2, en effet, le trajet à caractériser T est en partie superposé sur le trajet antérieur T2. Pour chaque trajet antérieur, on détermine la distance de Fréchet modifiée discrète selon le procédé selon l'invention. Pour le trajet antérieur T1, la distance de Fréchet modifiée discrète est de 2241 m, alors que pour le trajet antérieur T2, la distance de Fréchet modifiée discrète est de 41 m. Ainsi, on peut attribuer au trajet à caractériser T la caractérisation du trajet antérieur T2, par exemple le regroupement représentatif du trajet antérieur T2.

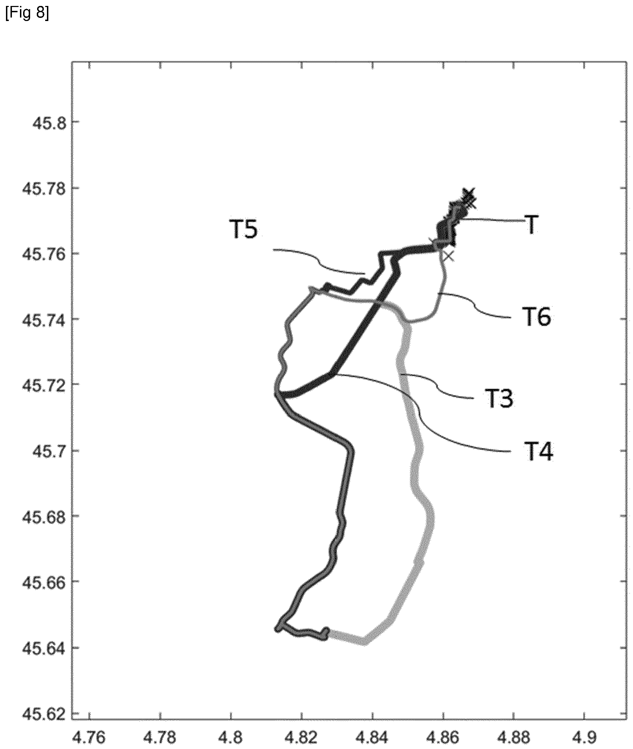

Le deuxième exemple correspond au mode de réalisation de la figure 4 : détermination du mode de transport au moyen d'un outil de planification des déplacements multimodaux. Dans un premier temps, on détermine au moyen de l'outil de planification des déplacements multimodaux différents trajets. Dans un deuxième temps, on détermine la distance de Fréchet modifiée discrète entre le trajet parcouru et chaque trajet obtenu par l'outil de planification des déplacements multimodaux. La figure 8 représente une carte de la métropole Lyonnaise. Dans un souci de lisibilité des cartes, les routes ne sont pas représentées. La figure 8 illustre le trajet parcouru T représenté par des croix et les différents trajets T3, T4, T5, T6 obtenus par l'outil de planification des déplacements multimodaux. Dans ce cas, le trajet à caractériser apparaît comme un sous-trajet d'un ensemble de trajets obtenus par l'outil de planification de déplacements multimodaux. La distance de Fréchet modifiée du trajet T3 est de 129.58m, celle du trajet T4 est de 130.53 m, celle du trajet T5 est de 18.61m, et celle du trajet T6 est de 19.75 m . Ainsi, on peut attribuer au trajet le mode de transport du trajet T5, qui minimise la distance de Fréchet modifiée discrète. Grâce à cela, on peut déterminer que le trajet parcouru a été réalisé au moyen du tramway T1 de Lyon, ce qui correspond bien à ce qui a été renseigné par l'utilisateur.

Ainsi, le procédé selon l'invention permet de caractériser de manière robuste un trajet parcouru par un utilisateur, au moyen de mesures par une capteur de géolocalisation.

## Revendications

1. Procédé de caractérisation d'un trajet (T) parcouru par un utilisateur, au moyen d'une base de données (BDD) comportant des données d'une pluralité de trajets antérieurs, dans lequel on met en œuvre les étapes suivantes :
a) On mesure (MES) au moyen d'un capteur de géolocalisation la position et l'horodatage d'une pluralité de points dudit trajet (T) à caractériser ;
b) Pour au moins deux trajets antérieurs de ladite base de données (BDD), on détermine une distance entre ledit trajet à caractériser et chacun desdits au moins deux trajets antérieurs au moyen de la distance modifiée de Fréchet discrète (DFM) en mettant en œuvre les étapes suivantes :
i) On détermine un séquencement optimal de couples de points entre ledit trajet à caractériser (T) et ledit trajet antérieur, en minimisant la distance entre lesdits couples de points , en limitant, dans ledit séquencement optimal de couples de points, le nombre de liaisons pour un unique point d'un trajet
ii) On détermine ladite distance modifiée de Fréchet discrète (DFM) par la moyenne desdites distances entre lesdits couples de points dudit séquencement optimal ;
c) On caractérise (CAR) ledit trajet à caractériser (T) par une comparaison desdites distances déterminées entre lesdits au moins deux trajets antérieurs de ladite base de données et ledit trajet à caractériser, ladite caractérisation (CAR) concerne la détermination d'au moins un mode de transport (mdt) dudit utilisateur pour ledit trajet à caractériser (T).

2. Procédé de caractérisation selon la revendication 1, dans lequel ladite caractérisation (CAR) concerne le classement dudit trajet à caractériser dans un regroupement représentatif de trajets.

3. Procédé de caractérisation selon la revendication 1, dans lequel on segmente ledit trajet à caractériser (T) en au moins deux sous-trajets, et on détermine ledit au moins un mode de transport dudit utilisateur pour chaque sous-trajet.

4. Procédé de caractérisation selon la revendication 1 ou 3, dans lequel on détermine ledit au moins un mode de transport (mdt) par comparaison avec un outil de planification de déplacement multimodal (OTP), qui détermine une combinaison de transports.

5. Procédé de caractérisation selon la revendication 4, dans lequel ledit outil de planification multimodal (OTP) comporte une cartographie des déplacements et des données de transport en commun.

6. Procédé de caractérisation selon l'une des revendications précédentes, dans lequel on compare en outre chaque distance modifiée de Fréchet discrète (DFM) déterminée avec un seuil, ledit seuil étant inférieur à 500 m, et de manière préférentielle ledit seuil est inférieur à 250 m, et on met en œuvre la caractérisation au moyen des étapes suivantes :
i) Si ladite distance modifiée de Fréchet discrète (DFM) déterminée est inférieure ou égale audit seuil, alors on attribue audit trajet à caractériser la même caractérisation que ledit trajet antérieur correspondant, et
ii) Si ladite distance modifiée de Fréchet discrète (DFM) déterminée est supérieure audit seuil, alors on n'attribue aucune caractérisation audit trajet à caractériser.

7. Procédé de caractérisation selon l'une des revendications précédentes, dans lequel on mesure au moins un paramètre complémentaire dudit trajet à caractériser, ledit paramètre complémentaire étant choisi parmi la vitesse dudit utilisateur, l'accélération dudit utilisateur, la précision dudit capteur de géolocalisation, l'altitude dudit utilisateur, et on met en œuvre un critère supplémentaire pour caractériser ledit trajet à caractériser en fonction dudit paramètre complémentaire.

8. Procédé de caractérisation selon l'une des revendications précédentes, dans lequel on détermine ladite distance modifiée de Fréchet discrète (DFM) en limitant, dans ledit séquencement optimal de couples de points, le nombre de liaisons pour un unique point d'un trajet, le nombre limite de liaisons étant compris entre 3 et 10, de manière préférée entre 4 et 7.

9. Procédé de caractérisation selon l'une des revendications précédentes, dans lequel on détermine ladite distance modifiée de Fréchet discrète (DFM) après éliminations des valeurs maximales de la distance dans ledit séquencement optimal de couples de points.

10. Procédé de caractérisation selon l'une des revendications précédentes, dans lequel le procédé comporte en outre une étape de prétraitement (INT) des mesures par une interpolation spatiale en distance.

11. Procédé de caractérisation selon l'une des revendications précédentes, dans lequel ladite base de données (BDD) desdits trajets antérieurs comporte uniquement des trajets antérieurs dudit utilisateur, avec au moins les données de géolocalisation et d'horodatages desdits trajets antérieurs.

12. Procédé de caractérisation selon l'une des revendications précédentes, dans lequel ladite base de données (BDD) comporte une information liée au mode de transport (mdt) pour au moins un trajet antérieur.

13. Procédé de caractérisation selon l'une des revendications précédentes, dans lequel ladite base de données (BDD) comporte au moins un groupement représentatif desdits trajets antérieurs.

14. Produit programme d'ordinateur téléchargeable depuis un réseau de communication et/ou enregistré sur un support lisible par ordinateur et/ou exécutable par un processeur ou un serveur, comprenant des instructions de code de programme pour la mise en œuvre les étapes b) et c) du procédé selon l'une des revendications précédentes, lorsque ledit programme est exécuté sur un ordinateur ou sur un téléphone portable.

## Patentansprüche

1. Verfahren zur Charakterisierung einer von einem Benutzer zurückgelegten Strecke (T) mittels einer Datenbank (BDD), die Daten einer Vielzahl von vorherigen Strecken umfasst, wobei die folgenden Schritte durchgeführt werden:
a) Messen (MES) der Position und des Zeitstempels einer Vielzahl von Punkten der zu charakterisierenden Strecke (T) mittels eines Geolokalisierungssensors;
b) für mindestens zwei vorherige Strecken der Datenbank (BDD), Bestimmen eines Abstands zwischen der zu charakterisierenden Strecke und jeder der mindestens zwei vorherigen Strecken mittels des modifizierten diskreten Fréchet-Abstands (DFM), indem die folgenden Schritte durchgeführt werden:
i) Bestimmen einer optimalen Sequenzierung von Punktepaaren zwischen der zu charakterisierenden Strecke (T) und der vorherigen Strecke, indem der Abstand zwischen den Punktepaaren minimiert wird, wobei in der optimalen Sequenzierung von Punktepaaren die Anzahl von Verbindungen für einen einzelnen Punkt einer Strecke begrenzt wird
ii) Bestimmen des modifizierten diskreten Fréchet-Abstands (DFM) durch den Mittelwert der Abstände zwischen den Punktepaaren der optimalen Sequenzierung;
c) Charakterisieren (CAR) der zu charakterisierenden Strecke (T) durch einen Vergleich der bestimmten Abstände zwischen den mindestens zwei vorherigen Strecken der Datenbank und der zu charakterisierenden Strecke, wobei die Charakterisierung (CAR) die Bestimmung mindestens eines Verkehrsmittels (mdt) des Benutzers für die zu charakterisierende Strecke (T) betrifft.

2. Verfahren zur Charakterisierung nach Anspruch 1, wobei die Charakterisierung (CAR) die Klassifizierung der zu charakterisierenden Strecke in einem repräsentativen Cluster von Strecken betrifft.

3. Verfahren zur Charakterisierung nach Anspruch 1, wobei die zu charakterisierende Strecke (T) in mindestens zwei Teilstrecken segmentiert wird und das mindestens eine Verkehrsmittel des Benutzers für jede Teilstrecke bestimmt wird.

4. Verfahren zur Charakterisierung nach Anspruch 1 oder 3, wobei das mindestens eine Verkehrsmittel (mdt) durch Vergleich mit einem multimodalen Reiseplanungsinstrument (OTP) bestimmt wird, das eine Verkehrskombination bestimmt.

5. Verfahren zur Charakterisierung nach Anspruch 4, wobei das multimodale Planungsinstrument (OTP) eine Kartographie der Reisen und Daten des öffentlichen Nahverkehrs umfasst.

6. Verfahren zur Charakterisierung nach einem der vorhergehenden Ansprüche, wobei ferner jeder bestimmte modifizierte diskrete Fréchet-Abstand (DFM) mit einem Schwellenwert verglichen wird, wobei der Schwellenwert kleiner als 500 m ist und der Schwellenwert vorzugsweise kleiner als 250 m ist, und die Charakterisierung mittels der folgenden Schritte durchgeführt wird:
i) wenn der bestimmte diskrete modifizierte Fréchet-Abstand (DFM) kleiner oder gleich dem Schwellenwert ist, dann wird der zu charakterisierenden Strecke die gleiche Charakterisierung wie der entsprechenden vorherigen Strecke zugewiesen, und
ii) wenn der bestimmte diskrete modifizierte Fréchet-Abstand (DFM) größer als der Schwellenwert ist, wird der zu charakterisierenden Strecke keine Charakterisierung zugewiesen.

7. Verfahren zur Charakterisierung nach einem der vorhergehenden Ansprüche, wobei mindestens ein ergänzender Parameter der zu charakterisierenden Strecke gemessen wird, wobei der ergänzende Parameter aus der Geschwindigkeit des Benutzers, der Beschleunigung des Benutzers, der Genauigkeit des Geolokalisierungssensors, der Höhe des Benutzers ausgewählt wird, und ein zusätzliches Kriterium eingesetzt wird, um die zu charakterisierende Strecke in Abhängigkeit von dem ergänzenden Parameter zu charakterisieren.

8. Verfahren zur Charakterisierung nach einem der vorhergehenden Ansprüche, wobei der diskrete modifizierte Fréchet-Abstand (DFM) bestimmt wird, indem in der optimalen Sequenzierung von Punktepaaren die Anzahl von Verbindungen für einen einzelnen Punkt einer Strecke begrenzt wird, wobei die Grenzanzahl von Verbindungen zwischen 3 und 10, vorzugsweise zwischen 4 und 7 beträgt.

9. Verfahren zur Charakterisierung nach einem der vorhergehenden Ansprüche, wobei der diskrete modifizierte Fréchet-Abstand (DFM) nach Eliminierungen der Maximalwerte des Abstands in der optimalen Sequenzierung von Punktepaaren bestimmt wird.

10. Verfahren zur Charakterisierung nach einem der vorhergehenden Ansprüche, wobei das Verfahren ferner einen Schritt des Vorverarbeitens (INT) der Messungen durch distanzbasierte räumliche Interpolation umfasst.

11. Verfahren zur Charakterisierung nach einem der vorhergehenden Ansprüche, wobei die Datenbank (BDD) der vorherigen Strecken nur vorherige Strecken des Benutzers umfasst, mit zumindest den Geolokalisierungs- und Zeitstempeldaten der vorherigen Strecken.

12. Verfahren zur Charakterisierung nach einem der vorhergehenden Ansprüche, wobei die Datenbank (BDD) eine Information bezüglich des Verkehrsmittels (mdt) für mindestens eine vorherige Strecke umfasst.

13. Verfahren zur Charakterisierung nach einem der vorhergehenden Ansprüche, wobei die Datenbank (BDD) mindestens einen für die vorherigen Strecken repräsentativen Cluster umfasst.

14. Computerprogrammprodukt, das aus einem Kommunikationsnetz heruntergeladen werden kann und/oder auf einem computerlesbaren Medium gespeichert ist und/oder durch einen Prozessor oder einen Server ausführbar ist, umfassend Programmcodeanweisungen zur Durchführung der Schritte b) und c) des Verfahrens nach einem der vorhergehenden Ansprüche, wenn das Programm auf einem Computer oder auf einem Mobiltelefon ausgeführt wird.

## Claims

1. Method for characterizing a route (T) travelled by a user, by way of a database (BDD) containing data from a plurality of previous routes, wherein the following steps are implemented:
a) measuring (MES), by way of a geolocation sensor, the position and the timestamp of a plurality of points of said route (T) to be characterized;
b) for at least two previous routes in said database (BDD), determining a distance between said route to be characterized and each of said at least two previous routes by way of the modified discrete Fréchet distance (DFM) by implementing the following steps:
i) determining an optimal sequencing of pairs of points between said route to be characterized (T) and said previous route, by minimizing the distance between said pairs of points, by limiting, in said optimal sequencing of pairs of points, the number of links for a single point on a route;
ii) determining said modified discrete Fréchet distance (DFM) by averaging said distances between said pairs of points of said optimal sequencing;
c) characterizing (CAR) said route to be characterized (T) by comparing said determined distances between said at least two previous routes in said database and said route to be characterized, said characterizing (CAR) concerning the determination of at least one mode of transport (mdt) of said user for said route to be characterized (T).

2. Characterizing method according to Claim 1, wherein said characterizing (CAR) concerns the classification of said route to be characterized into a cluster of routes.

3. Characterizing method according to Claim 1, wherein said route to be characterized (T) is segmented into at least two sub-routes, and said at least one mode of transport of said user is determined for each sub-route.

4. Characterizing method according to Claim 1 or 3, wherein said at least one mode of transport (mdt) is determined by comparison with a multimodal travel planning tool (OTP), which determines a combination of means of transport.

5. Characterizing method according to Claim 4, wherein said multimodal planning tool (OTP) comprises a map of movements and public transport data.

6. Characterizing method according to one of the preceding claims, wherein each determined modified discrete Fréchet distance (DFM) is furthermore compared with a threshold, said threshold being less than 500 m, and preferably said threshold is less than 250 m, and the characterizing is implemented by way of the following steps:
i) if said determined modified discrete Fréchet distance (DFM) is less than or equal to said threshold, then said route to be characterized is assigned the same characterization as said corresponding previous route, and
ii) if said determined modified discrete Fréchet distance (DFM) is greater than said threshold, then no characterization is assigned to said route to be characterized.

7. Characterizing method according to one of the preceding claims, wherein at least one parameter complementary to said route to be characterized is measured, said complementary parameter being chosen from among the speed of said user, the acceleration of said user, the accuracy of said geolocation sensor, the altitude of said user, and an additional criterion is implemented in order to characterize said route to be characterized on the basis of said complementary parameter.

8. Characterizing method according to one of the preceding claims, wherein said modified discrete Fréchet distance (DFM) is determined by limiting, in said optimal sequencing of pairs of points, the number of links for a single point on a route, the limit number of links being between 3 and 10, preferably between 4 and 7.

9. Characterizing method according to one of the preceding claims, wherein said modified discrete Fréchet distance (DFM) is determined after eliminating the maximum values of the distance in said optimal sequencing of pairs of points.

10. Characterizing method according to one of the preceding claims, wherein the method furthermore comprises a step (INT) of preprocessing the measurements through spatial distance interpolation.

11. Characterizing method according to one of the preceding claims, wherein said database (BDD) of said previous routes contains only previous routes of said user, with at least the geolocation data and timestamp data of said previous routes.

12. Characterizing method according to one of the preceding claims, wherein said database (BDD) contains information related to the mode of transport (mdt) for at least one previous route.

13. Characterizing method according to one of the preceding claims, wherein said database (BDD) contains at least one cluster of said previous routes.

14. Computer program product downloadable from a communication network and/or recorded on a medium able to be read by computer and/or able to be executed by a processor or a server, comprising program code instructions for implementing steps b) and c) of the method according to one of the preceding claims when said program is executed on a computer or on a mobile phone.
